# EUROPÄISCHE PATENTSCHRIFT

(11) **EP 3 188 576 B1**
(45) Veröffentlichungstag und Bekanntmachung des Hinweises auf die Patenterteilung: **08.08.2018**
(21) Anmeldenummer: 17150116.6
(22) Anmeldetag: 03.01.2017
(51) Int. Cl.: H05B 37/02

(54) **LEUCHTENSYSTEM, VERWENDUNG EINES LEUCHTENSYSTEMS UND LEUCHTENVORRICHTUNG ZUR VERWENDUNG IN EINEM LEUCHTENSYSTEM**
LIGHTING SYSTEM, USE OF A LIGHTING SYSTEM AND LIGHT DEVICE FOR USE IN A LIGHTING SYSTEM
SYSTÈME D'ÉCLAIRAGE, UTILISATION D'UN SYSTÈME D'ÉCLAIRAGE ET DISPOSITIF D'ÉCLAIRAGE DESTINÉ À ÊTRE UTILISÉ DANS UN SYSTÈME D'ÉCLAIRAGE

(30) Priorität: 04.01.2016 DE 102016100059
(43) Veröffentlichungstag der Anmeldung: 05.07.2017
(73) Patentinhaber: STEINEL GmbH, 33442 Herzebrock (DE)
(72) Erfinder: Möller, Thomas, 32049 Herford (DE)
(74) Vertreter: Patentanwälte Behrmann Wagner PartG mbB

(56) Entgegenhaltungen:
- WO-A1-2010/067246
- WO-A1-2015/185402
- DE-U1-202013 103 146
- US-A1- 2002 175 815

## Beschreibung

Die vorliegende Erfindung betrifft ein Leuchtensystem nach dem Oberbegriff des Hauptanspruchs. Ferner betrifft die vorliegende Erfindung eine Verwendung eines derartigen gattungsgemäßen Leuchtensystems, und die Erfindung betrifft eine Leuchtenvorrichtung, welche zur Verwendung in einem derartigen gattungsgemäßen Leuchtensystem vorgesehen und ausgebildet ist.

Aus dem Stand der Technik sind Leuchtensysteme nach dem Oberbegriff des Hauptanspruchs allgemein bekannt. Etwa in Form üblicher Sensorleuchten weisen diese, typischerweise zur Wand- und/oder Deckenmontage, neben geeignet mittels LEDs, Glüh- oder Entladungslampen realisierten Leuchtenmittel Detektionsmittel auf, welche, etwa unter Nutzung von Infrarot- und Radartechnologien, zur Bewegungs- bzw. Anwesenheitserfassung von in einem Erfassungsbereich der Leuchteneinheit sowie zum gesteuerten Aktivieren der Leuchtmittel als Reaktion auf eine derartige Erfassung ausgebildet sind. Typischerweise sind bekannte Detektionsmittel (ergänzend oder alternativ) auch zum Erfassen einer Umgebungs- oder Bereichshelligkeit ausgestaltet, um, etwa in der Art herkömmlicher Dämmerungsschalter, als Reaktion auf erfasste Umgebungslichtpegel dann eine Lichtstärke der Leuchtmittel geeignet anzusteuern. WO 2010/067246 A1 zeigt in einem Beleuchtungssystem die Übertragung von Einstellparametern zwischen den beteiligten Lampen. Die prinzipiell beliebige Einsetzbarkeit gattungsgemäßer Leuchtensysteme - diese sind neben üblichen Innenräumen insbesondere auch in Außenbereichen einsetzbar - bedingt, das Verhalten der Detektionsmittel entsprechend den Bedingungen an einem jeweiligen Montageort einzustellen bzw. zu parametrisieren. Aus diesem Grunde weisen gattungsgemäße und als allgemein bekannt vorauszusetzende Leuchtensysteme in einer jeweiligen Leuchteneinheit Einstell- und/oder Parametrisierungsmittel auf, welche einerseits, im Hinblick auf die Detektionsmittel, geeignete Detektionsparameter von Bewegungs-, Anwesenheits-, und Helligkeitssensoren einstellen und vorgeben können. Andererseits sind die Einstell- bzw. Parametrisierungsmittel vorgesehen, um, wiederum mithilfe geeigneter, typischerweise manuell betätigbarer Bedienelemente od.dgl. Schnittstelleneinheiten, Leuchtmodusparameter der Leuchtmittel einzustellen. Diese Leuchtmodusparameter können beispielsweise in Form von (absoluten oder relativen) Lichtstärken bzw. Helligkeiten der Leuchtmittel angepasst bzw. vorgegeben werden, eingeschlossen verschiedene, einem jeweiligen Betriebs- bzw. Leuchtmodus zugeordneten Lichtstärkeverhalten der Leuchtmittel.

Die zunehmende Leistungsfähigkeit gattungsgemäßer Leuchtensysteme, bei welchen dann, etwa einem gemeinsamen Raum wie einen Büroraum zugeordnet, nicht nur eine einzelne Leuchteneinheit zu montieren und geeignet einzustellen bzw. zu parametrisieren ist, sondern, etwa bedingt durch eine Raumgröße, eine Mehrzahl von Leuchten vorgesehen werden müssen, führt zu beträchtlichem Montage- und Einrichteaufwand. Dieser Aufwand ist dabei nicht nur bedingt durch die vielfältigen technischen Funktionalitäten, etwa in Form der möglichen Sensor- und Leuchtmodusfunktionalitäten, welche dann jeweils geeignet eingestellt bzw. parametrisiert werden müssen, auch sorgt die notwendige Mehrzahl zu montierender (einzelner) Leuchteneinheiten dafür, dass diese (jeweiligen) Einstell- und Parametrisierungsarbeiten entsprechend der Mehrzahl der Leuchteneinheiten sich vervielfältigen. Im Ergebnis führt dies dazu, dass gerade in einem Objektbereich mit einer Vielzahl von in einem Leuchtensystem vorzusehender (einzelner) Leuchteneinheiten der Montage-, Einstell- und Parametrisierungsaufwand einen signifikanten Anteil der zur betriebsfertigen Herstellung des Leuchtensystems erforderlichen Kosten ausmacht.

Aufgabe der vorliegenden Erfindung ist es daher, ein Leuchtensystem nach dem Oberbegriff des Hauptanspruchs im Hinblick auf eine Vereinfachung der Einstellung und Parametrisierung bei der Montage bzw. einer nachfolgenden Inbetriebnahme zu vereinfachen, dabei insbesondere ein Leuchtensystem zu schaffen, welches mit einer Mehrzahl von Leuchteneinheiten in einem gemeinsamen oder einander benachbarten Montageraum mit vergleichbaren Umgebungsbedingungen eine drastisch verkürzte Konfigurationszeit in Form einer Verkürzung einer Einstellung und Parametrisierung der jeweiligen Leuchteneinheiten ermöglicht.

Die Aufgabe wird durch das Leuchtensystem mit den Merkmalen des Hauptanspruchs (Anspruch 1) gelöst. Vorteilhafte Weiterbildungen sind in den Unteransprüchen beschrieben. Ferner wird die Aufgabe durch die Verwendung des erfindungsgemäßen Leuchtensystems für die Büro- und/oder Objektbeleuchtung gelöst (Anspruch 9), wobei hier eine Eignung für die Deckenbeleuchtung in einem einzelnen oder einer Mehrzahl einander benachbarter Büroräume sich als besonders vorteilhaft herausgestellt hat. Schließlich wird Schutz im Rahmen der vorliegenden Erfindung beansprucht für eine (einzelne) Leuchteneinheit zur Verwendung im erfindungsgemäßen Leuchtensystem, welche, wiederum ausgebildet als Wand- oder Deckenleuchte und aufweisend auf Mikrowellenbasis wirkende Detektionsmittel zur Bewegungs- und/oder Anwesenheitsdetektion, sich als besonders geeignet zur Implementierung des erfindungsgemäßen Leuchtensystems erwiesen hat.

In erfindungsgemäß vorteilhafter Weise basiert das Leuchtensystem gemäß Hauptanspruch zunächst auf der Erkenntnis, dass in einem gemeinsamen oder benachbarten Montageumfeld anzubringende (einzelne) Leuchteneinheiten jeweils durch die Einstellung bzw. Parametrisierung vorzusehende Detektionsparameter bzw. Leuchtmodusparameter benötigen, die einander vergleichbar sind, ggf. lediglich um kleinere Unterschiede voneinander abweichen. Gleichzeitig ist häufig eine Grundeinstellung in Form einer Vorab-Parametrisierung durch a priori-Vorgabe von Detektionsparametern und Leuchtmodusparametern nicht möglich, da diese außerhalb eines konkreten Montageumfelds nicht sinnvoll vorab bestimmbar sind.

Auf der Basis dieser erfinderischen Erkenntnis setzt daher die vorliegende Erfindung die Technologie um, eine an einer (bevorzugt einzelnen) ersten Leuchteneinheit durch geeignete Betätigung der Einstell- bzw. Parametrisierungsmittel die erforderlichen Detektionsparameter für die Detektionsmittel sowie die erforderlichen Leuchtmodusparameter für die Leuchtmittel einzurichten, woraufhin dann über die erfindungsgemäßen Parameterkommunikationsmittel diese zugehörigen Parameterdaten der ersten Leuchteneinheit zu den weiteren Leuchteneinheiten des Leuchtensystems drahtlos, damit automatisiert und prinzipiell ohne die Notwendigkeit, grundsätzliche Veränderungen der Parameter an den jeweils anderen Leuchteneinheiten vornehmen zu müssen. Gleichwohl kann hier dann, entsprechend dort jeweils im Detail geänderter Bedingungen, nach wie vor eine Veränderung durch jeweils individuelle Betätigung der Einstell- bzw. Parametrisierungsmittel der weiteren Leuchteneinheiten erfolgen, ein derartiger, ggf. notwendiger zusätzlicher Aufwand ist jedoch deutlich geringer als eine jeweilige vollständige Neueinstellung bzw. Neuparametrisierung aller Leuchteneinheiten im Gesamtsystem.

In der erfindungsgemäßen Ausgestaltung bzw. Weiterbildung können dabei sowohl die Detektionsparameter das nahezu vollständige Parameter- und Einstellspektrum der jeweils möglichen Detektionsmittel abdecken, als auch die erfindungsgemäß in Form der Parameterdaten kommunizierbaren Leuchtmodusparameter sämtliche zur Einstellung vorgesehenen bzw. einstellbaren Leuchtmodusparameter der jeweils versehenen Leuchtmittel abdecken. Dabei ist es nicht notwendig, dass die erfindungsgemäßen Leuchteneinheiten körperlich integriert sind, vielmehr gilt als "Leuchteneinheit" im Sinne der Erfindung auch eine Anordnung bestehend aus einer (etwa die Detektionsmittel aufnehmenden) Sensoreinheit, welche geeignet mit einer auch entfernt von dieser vorgesehenen bzw. vorsehbaren Leuchtmitteleinheit kommuniziert.

Erfindungsgemäß weiterbildend sind den Parameterkommunikationsmitteln manuell betätigbare Schalt-, Bedienungs- und/oder Schnittstellenmittel zur Betätigung durch eine Bedienperson zugeordnet. Grundsätzlich ist es möglich, über etwa geeignet an den jeweiligen Leuchteneinheiten vorgesehene Schalter, Einstellknöpfe oder dgl. betätigbare Schnittstellenmittel, eine unmittelbare Betätigung durch eine Bedienperson (= Einstell- und Parametrisierungsperson) zu ermöglichen, komfortabler und erfindungsgemäß bevorzugt ist es jedoch, die manuell betätigbaren Schalt-Bedienungs- bzw. Schnittstellenmittel in Form einer drahtlos angebundenen Fernsteuerung vorzusehen, welche etwa, in ansonsten bekannter Weise, über eine Infrarot- oder Funkstrecke dann der Bedienperson von einem von einer jeweiligen Leuchteneinheit entfernten Ort die Parameterkommunikation vorzunehmen bzw. auszulösen, ergänzend natürlich auch die eigentliche Funktionalität der Einstell- bzw. Parametrisierungsmittel zu übernehmen (mit anderen Worten, die weiterbildungsgemäßen manuellen Schalt-, Bedienungs- und/oder Schnittstellenmittel ermöglichen als solche auch eine fernbediente Einstellung bzw. Parametrisierung zum Vorgeben und Verändern der Detektionsparameter bzw. der Leuchtmodusparameter). Dabei ist es weiterbildend auch möglich, die Parameterkommunikation über eine (Detektions-)Funktionalität der Detektionsmittel auszulösen (also etwa als Reaktion auf eine Bewegungs- und/oder Anwesenheitsdetektion), und es kann dann - zusätzlich - auch eine Detektionsfunktionalität der Detektionsmittel zu der weiteren Leuchteneinheit übertragen werden, etwa mit dem Zweck, eine gemeinsame Leuchtmittelaktivierung im Leuchtensystem zu bewirken.

Im Hinblick auf eine einfach zu bedienende und betriebssichere Ausgestaltung derartiger manuell betätigbarer Fernsteuermittel ist es dann weiterbildungsgemäß im Rahmen der Erfindung bevorzugt, dieser (als solche etwa mittels der beschriebenen gängigen Ansteuertechnologien eingerichteten) Fernsteuereinheit eine portable Datenverarbeitungsvorrichtung zuzuordnen, welche insbesondere mittels der hierdurch bereitgestellten, weiter bevorzugt berührungsempfindlichen und damit auch zur Befehlseingabe tauglichen Displayeinheit eine komfortable und elegante Möglichkeit bietet, selbst komplexe Parametrisierungen im Leuchtensystem der Bedienperson über diese Displayeinheit einzustellen und zur visuellen Überprüfung anzubieten.

Insbesondere die erfindungsgemäße Übertragbarkeit der Parameterdaten der ersten Leuchteneinheit durch die Parameterkommunikationsmittel zu den weiteren Leuchteneinheiten lässt sich wiederum erfindungsgemäß weiterbildend und vorteilhaft auf zwei Weisen realisieren, welche auch alternativ zueinander bzw. umschaltbar im Rahmen der selben Einheit realisiert sein können. Einerseits kann es etwa günstig und bevorzugt sein, als Reaktion auf das Aktivieren der Parameterkommunikationsmittel einen vollständigen Parameterstatus (und einen zugehörigen Parameterdatensatz) der ersten Leuchteneinheit zu übertragen, so dass umfassend sämtliche relevanten Detektions- und Leuchtmodusparameter mit einem einzigen Bedienschritt übertragbar sind. Erfindungsgemäß wird ermöglicht, als Reaktion auf eine Aktivierung der Parameterkommunikationsmittel lediglich den Parameter mit zugehörigen Daten zu übertragen, welcher eine als letztes vor der Aktivierung der Parameterkommunikationsmittel durch die Bedienperson vorgenommenen Einstellung bzw. Vorgabe an der ersten Leuchteneinheit entspricht.

Auch liegt es im Rahmen bevorzugter Weiterbildungen der Erfindung, einen Quittungs- bzw. Antwortmodus für die Parameterkommunikationsmittel einzurichten, etwa in Form der weiterbildungsgemäß vorgesehenen Bestätigungs- bzw. Quittungsmittel. Diese könnten vorteilhaft so eingereichtet und ausgebildet sein, dass als Reaktion auf eine erfolgte (und erfolgreiche) Übertragung der Parameterdaten zur mindestens einen weiteren Leuchteneinheit ein positives Quittungssignal erzeugt und etwa zur ersten Leuchteneinheit zurück übertragen wird. Eine wiederum aus Montagesicht besonders elegante Variante dieser erfindungsgemäßen Weiterbildung würde so auszugestalten sein, dass (lediglich) als Reaktion auf eine fehlerhafte oder unvollständige Übertragung der Parameterdaten ein Negativ-Quittungssignal erzeugt und ggf. zurückübertragen wird, während ansonsten eine Montage-(Bedien-) Person von ordnungsgemäßer Funktionsfähigkeit und Übertragung ausgehen kann. Eine derartige Technologie würde dann in ansonsten bekannter Weise eine bestehende, z.B. trägerbasierte Funkverbindung zwischen den Leuchteneinheiten des Leuchtensystems voraussetzen, wobei dann lediglich im Fall der aufmerksamkeitsbedürftigen Fehlersituation (keine, oder keine vollständige Übertragung der Parameterdaten) der Bedienperson Handlungsbedarf angezeigt wird.

Im Ergebnis ermöglicht es die vorliegende Erfindung in überraschend einfacher und konstruktiv leicht zu implementierender Weise, den Einrichtungs- und Parametrisierungsaufwand einer Mehrzahl von Leuchteneinheiten eines Leuchtensystems nach einer Montage an jeweils vorgesehenen (üblicherweise einander benachbarten) Montageorten signifikant zu vereinfachen und damit durch den gesparten Zeitaufwand Kostenvorteile zu realisieren.

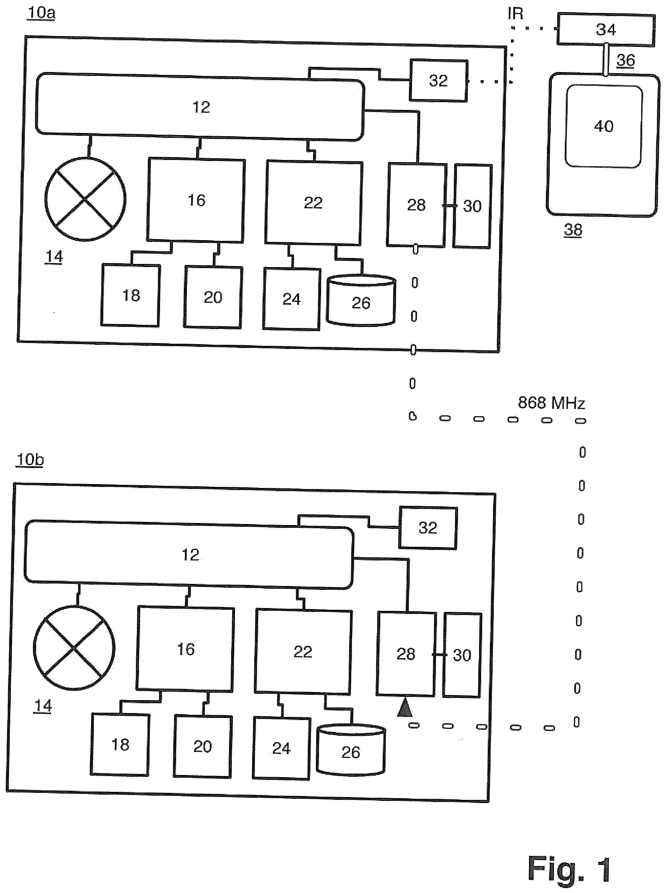

Weitere Vorteile, Merkmale und Einzelheiten der Erfindung ergeben sich aus der nachfolgenden Beschreibung eines bevorzugten Ausführungsbeispiels sowie anhand der einzigen Figur; diese zeigt in
- Fig. 1: ein schematisches Blockschaltbild des Leuchtensystems gemäß einem ersten bevorzugten Ausführungsbeispiel der Erfindung.

Die Fig. 1 verdeutlicht schematisch und durch Umrandungen 10a, 10b ein Paar von Leuchteneinheiten, welche geeignet als Decken- oder Wandleuchten an einer (bevorzugt gemeinsamen) Montagedecke, etwa eines Büroraums, befestigbar sind. Beide Leuchteneinheiten 10a, 10b sind strukturell identisch aufgebaut und im vorliegenden Beispiel als typische sensorgesteuerte Deckenleuchten vorliegend, wie sie etwa im Objektbereich allgemein angeboten und durch Montage- und Bedienpersonal montiert, mit einer elektrischen Versorgungsleitung verbunden und dann nach diesem Anschließen geeignet parametrisiert werden.

Die jeweiligen Funktionskomponenten der Leuchteneinheiten 10a, 10b ergeben sich gleichermaßen aus dem Blockschaltbild der Fig. 1. Angesteuert und betrieben durch eine (üblicherweise mittels einer Mikrocontrollereinheit od.dgl. Elektronik realisierte) Steuereinheit 12 weist jede der Leuchteneinheiten zunächst ein Leuchtmittel 14 auf, im dargestellten Ausführungsbeispiel abstrakt symbolisiert als Einheit von zur Raumbeleuchtung eingerichteten, ggf. gruppierten und ggf. mit Reflektoren versehenen LEDs.

Ferner weist jede der Leuchteneinheiten (wiederum in ansonsten bekannter Weise) eine Detektionseinheit 16 auf, welche einerseits, mittels eines auf dem Doppler-Prinzip beruhenden, als solches bekannten Radarsensors zur Bewegungsdetektion eines in einem Erfassungsbereich des Sensors 18 bewegendem Objekts (etwa einer Person) ausgebildet ist. Zum anderen ist der Detektoreinheit ein Lichtsensor 20, etwa in Form eines zur Umgebungs- bzw. Bereichshelligkeitsdetektion (wiederum bezogen auf die jeweilige Leuchteneinheit) ausgebildeten Phototransistors 20 zugeordnet. In ansonsten bekannter Weise sind verschiedene Betriebseigenschaften der Detektionseinheit samt verbundenen Sensoren, etwa eine Reichweite oder Sensorempfindlichkeit des Bewegungsmelders 18, ergänzend oder alternativ eine Helligkeitsempfindlichkeit (ggf. in mehreren Stufen), eine Farbe oder Farbtemperatur und/oder eine Grundhelligkeit der Leuchtmittel 14 (etwa ein auch im Ausschaltzustand verbleibender Rest-Lichtpegel), eine Mindest-Einschaltdauer nach dem Aktivieren od.dgl. Parameter durch eine Einstelleinheit 22, insbesondere durch eine dieser zugeordnete, von außerhalb eines (nicht im Detail gezeigten) Gehäuses der Leuchteneinheit betätigbarn Reglergruppe 24, einstellbar. Vorbestimmte, etwa einen Auslieferungszustand bestimmende oder aktuell vorgewählte bzw. - in nachfolgend noch beschreibender Weise empfangene - Parameter der vorgenannten Art sind zudem in einer nicht-flüchtigen Speichereinheit 26, der Einstelleinheit 22 zugeordnet, ablegt. Schließlich ist, wie die Fig. 1 erkennen lässt, der Steuereinheit 12 sowie der Einstelleinheit 22 eine Parameterkommunikationseinheit 28 zugeordnet, welche wiederum, über eine (im Beispiel als Dipswitch-Gruppe realisierte) Kanalauswahleinheit 30 im Hinblick auf einen für die drahtlose Parameterkommunikation zwischen den Leuchteneinheiten 10a, 10b auswählbaren Funkkanal einstellbar ist.

Zur drahtlosen Fernbedienung (und gleichermaßen zum drahtlosen Zugreifen auf die Einstelleinheit 22) durch eine Bedienperson ermöglicht jede der Leuchteneinheiten mittels einer Infrarot-Kommunikationsschnittstelle 32 ein drahtloses Zusammenwirken mit einer Fernsteuereinheit 34, welche insbesondere in einem zur Bedienung bzw. Parametereinstellung typischen Nah- bzw. Kurzbereich (also üblicherweise innerhalb desselben Raums der Montage der Leuchteneinheiten, damit im Bereich weniger Meter) den drahtlosen Zugriff auf eine jeweilige der Leuchteneinheiten ermöglicht. Im vorbeschriebenen Ausführungsbeispiel ist die Fernsteuereinheit 34 ohne eine eigene Schnittstellen- bzw. Bedieneinheit zur manuellen Bedienung versehen, dies wird vielmehr erreicht durch eine mit der Fernsteuereinheit über eine schematisch gezeigte drahtlose Nah-Anbindung (hier nach dem Bluetooth-Standard), Bezugszeichen 36, ausgebildete mobile Datenverarbeitungsvorrichtung 38, welche etwa in Form eines gängigen Smartphones mit einem üblichen berührungsempfindlichen Bildschirm 40 nicht nur vergleichbar komplexe Darstellungen an eine Bedienperson übermitteln kann, sondern zudem mittels der Berührungsempfindlichkeit auch eine Eingabe- bzw. Betätigungstechnologie anbietet, welche dann wiederum, über die Bluetooth-Schnittstelle 36, an die Fernsteuereinheit 34 und von dort per Infrarot an die jeweils zu steuernde Leuchteneinheit (hier: 10a) die Bedienungs- und Einrichtekommunikation ermöglicht.

Der Betrieb des in Fig. 1 gezeigten Leuchtensystems des Ausführungsbeispiel der Erfindung ist wie folgt: Nach erfolgter (Decken-)Montage der Mehrzahl der Leuchteneinheiten 10a, 10b und elektrischem Stromversorgungsanschluss richtet die Bedienperson zunächst die erste Leuchteneinheit 10a ein, mithilfe entweder von Potentiometern, Einstellknöpfen oder Reglern an der manuell betätigbaren Einheit 24 unmittelbar am Gerät, alternativ oder ergänzend durch Betätigung geeigneter (etwa graphisch aufbereiteter) Einrichtungssymbole auf der berührungsempfindlichen Display-Einheit 40 der per Infrarot angebundenen Fernbedienungseinheit samt mobiler Datenverarbeitungseinheit 34, 38; hier wird dann die Parametrisierung über die Infrarot-Strecke 34-32 und die Steuereinheit 12 zur Einstelleinheit 22 gebracht. Die Speichereinheit 26 legt einen aktuellen Parametersatz ab.

Durch Betätigung eines weiteren Auslösemechanismus, etwa eines auf der Display-Einheit 40 zur Betätigung abgebildeten Schalters (nicht gezeigt), aktiviert die Bedienperson nunmehr die Parameterübertragung der vorgenommenen Parametrisierung, wobei die Parameterkommunikationsmittel 28 diesen Befehl empfangen und daraufhin, symbolisiert durch die gestrichelte Linie, im beschriebenen Ausführungsbeispiel mittels eines undirektionalen Paket-bezogenen Übertragungsprotokolls (hier gewählt: Trägerfrequenz im Bereich 868 MHz) den Satz der eingerichteten Parameter an die zweite der Leuchteneinheiten (bei größeren Systemen auch an alle weiteren Leuchteneinheiten des Systems) übertragen kann. Dabei sind, bereits vor der eigentlichen (Decken-)Montage, die jeweiligen Kanalwahlschalter 30 der Einheiten 10a, 10b auf denselben Funkkanal im beschriebenen Frequenzband eingerichtet, so dass durch diese Kanalauswahl auch die Gruppenzugehörigkeit (damit gehören 10a, 10b zur einer gemeinsamen Gruppe bzw. verkörpern das System) technisch abgebildet ist.

In der Parameterkommunikationseinheit 28 der Leuchteneinheit 10b wird nunmehr das codierte Parameterdaten-Paket empfangen, dekodiert und in die Einstelleinheit 22 transferiert, ersetzt insoweit dann eine (ursprüngliche oder vorherige) Parametrisierung.

Für übliche Anwendungsfälle dürfte, gerade bei benachbarten Leuchteneinheiten bzw. in einem gemeinsamen Raum, bereits diese Parameterübertragung ausreichend sein, ohne dass überhaupt eine konkrete Lokalfeineinstellung bzw. Justierung an der Leuchteneinheit 10b erfolgt. Gleichwohl besteht auch diese Möglichkeit, entweder wiederum durch unmittelbaren Zugriff auf die manuell betätigbaren Stellmittel 24 der Leuchteinheit 10b, alternativ oder ergänzend wiederum durch Ankoppeln der Baugruppen 34 bis 40 an nunmehr die Infrarot-Schnittstelle dieser zweiten Leuchteneinheit 10b.

Aus der obigen Beschreibung wird deutlich, dass das lediglich exemplarisch anhand von zwei Leuchteneinheiten beschriebene System nahezu beliebig skalierbar ist, auch wenn, für möglichst einheitliche Parametrisierungsverhältnisse, die Erfindung am wirksamsten ist, wenn die einzelnen Leuchteneinheiten zueinander benachbart und/oder in einem gemeinsamen Raum vorgesehen sind. Gleichwohl, insbesondere im vorliegenden und bevorzugten Einsatzgebiet des Objektbereichs, dürften sich die Vorteile der Erfindung auch realisieren, wenn etwa nicht dieselben Räume (sondern etwa benachbarte) durch die erfindungsgemäße Einstellung und Parametrisierung behandelt werden. Auch zeigt das Ausführungsbeispiel der Fig. 1 etwa integrierte Leuchteneinheiten, bei welchen die erfindungsgemäßen Funktionalitäten zusammen mit einem geeigneten, zusätzlich die Leuchtmittel aufweisenden Gehäuse integriert sind. Auch dies ist zur Realisierung der Erfindung nicht notwendig, vielmehr sind insbesondere auch Konstellationen und Varianten denkbar, bei welchen etwa eine separate (Gehäuse-)Einheit Leuchtmittel aufnimmt, während die weiteren Funktionskomponenten in (mindestens) einem zusätzlichen Gehäuse aufgenommen sind. Auch sind Mischformen denkbar.

## Patentansprüche

1. Leuchtensystem mit einer Mehrzahl von zum Übertragen von Daten eingerichteten Leuchteneinheiten (10a, 10b),
die jeweils an einem Montageort stationär anbringbar ausgebildet sind, jeweils Detektionsmittel (16) zur Bewegungs-, Anwesenheits-, Umgebungshelligkeits- und/oder Bereichshelligkeitsdetektion aufweisen
und Einstell- und/oder Parametrisierungsmittel (22) zum Vorgeben und Verändern von Detektionsparametern der Detektionsmittel sowie von Leuchtmodusparametern von den Leuchteneinheiten zugeordneten Leuchtmitteln aufweisen,
**dadurch gekennzeichnet, dass**
die auf Funk- und/oder Hochfrequenzbasis drahtlos miteinander verbindbaren Leuchteneinheiten jeweils Parameterkommunikationsmittel (28) so zugeordnet aufweisen,
dass als Reaktion auf eine bevorzugt manuelle Aktivierung eines Parameterkommunikationsmittels (28) einer ersten der Leuchteneinheiten (10a) Parameterdaten der der ersten Leuchteneinheit vorgegebenen Detektions- und/oder Leuchtmodusparameter zu zumindestens einer weiteren der Leuchteneinheiten (10b) übertragen werden,
von dem Parameterkommunikationsmittel (28) der weiteren Leuchteneinheit (10b) empfangen und die Einstell- bzw. Parametrisierungsmittel (22) der weiteren Leuchteneinheit so angesteuert werden, dass diese den Detektions- und/oder Leuchtmodusparametern der ersten Leuchteneinheit entsprechende Detektions- bzw. Leuchtmodusparameter vorgeben und einstellen,
wobei die Parameterkommunikationsmittel (28) so ausgebildet sind, dass auswählbar ein einzelner der Detektions- bzw. Leuchtmodusparameter entsprechend einer als letzte vor der Aktivierung des Parameterkommunikationsmittels vorgenommenen Einstellung und/oder Vorgabe übertragen wird.

2. Leuchtensystem nach Anspruch 1, **dadurch gekennzeichnet, dass** die Detektionsparameter mindestens einen Parameter aufweisen, der ausgewählt ist aus der Gruppe bestehend aus einem Reichweitenparameter der Bewegungs- und/oder Anwesenheitsdetektion, einer Sensorempfindlichkeit der Bewegungs- und/oder Anwesenheitsdetektion, einem Helligkeitsschwellwert der Umgebungs- und/oder Bereichshelligkeitsdetektion.

3. Leuchtensystem nach Anspruch 1 oder 2, **dadurch gekennzeichnet, dass** der Leuchtmodusparameter mindestens einen Parameter aufweist, der ausgewählt ist aus der Gruppe bestehend aus einem Mindestleuchtdauerparameter der Leuchtmittel, einem maximalen Helligkeitsparameter der Leuchtmittel, einem Mindesthelligkeitsparameter der Leuchtmittel, einer Lichtfarbe oder Farbtemperatur der Leuchtmittel, Modusparametern zum Vorbestimmen verschiedener Leuchtmodi der Leuchtmittel.

4. Leuchtmittelsystem nach einem der Ansprüche 1 bis 3, **dadurch gekennzeichnet, dass** den Parameterkommunikationsmitteln manuell betätigbare Schalt-, Bedienungs- und/oder Schnittstellenmittel (24, 34-38) zur Betätigung durch eine Bedienperson, bevorzugt drahtlos angebunden, zugeordnet werden können.

5. Leuchtensystem nach Anspruch 4, **dadurch gekennzeichnet, dass** die Schalt-, Bedienungs- bzw. Schnittstellenmittel als drahtlos mit mindestens einer der Leuchteneinheiten zusammenwirkende, manuell handhabbare Fernsteuereinheit (34-32) ausgebildet sind.

6. Leuchtensystem nach Anspruch 5, **dadurch gekennzeichnet, dass** die Fernsteuereinheit zum lösbaren und/oder drahtlosen Zusammenwirken mit einer portablen Datenverarbeitungsvorrichtung (38) ausgebildet ist, die ein berührungsempfindliches Display (40) zum Darstellen eines Parameterstatus der Detektions- und/oder Leuchtmodusparameter und/oder zum Aufnehmen von Betätigungs- und/oder Konfigurationsbefehlen der Bedienperson ausgebildet ist.

7. Leuchtensystem nach einem der Ansprüche 1 bis 6, **dadurch gekennzeichnet, dass** die Parameterkommunikationsmittel so ausgebildet sind, dass ein vollständiger und einem aktuellen Parameterstatus einer Leuchteneinheit entsprechender Datensatz sämtlicher Detektions- bzw. Leuchtmodusparameter der ersten Leuchteneinheit übertragen wird.

8. Leuchtensystem nach einem der Ansprüche 1 bis 7, **dadurch gekennzeichnet, dass** die Parameterkommunikationsmittel Bestätigungs- und/oder Quittungsmittel so aufweisen, dass als Reaktion auf eine erfolgte Übertragung der Parameterdaten zur weiteren Leuchteneinheit ein positives Quittungssignal erzeugt, insbesondere zur ersten Leuchteneinheit zurück übertragen, wird und/oder als Reaktion auf eine fehlerhafte und/oder unvollständige Übertragung der Parameterdaten ein Negativ-Quittungssignal erzeugt, insbesondere zur ersten Leuchteneinheit zurück übertragen, wird.

9. Verwendung des Leuchtensystems nach einem der Ansprüche 1 bis 8, für die Büro- und/oder Objektbeleuchtung, insbesondere für Deckenbeleuchtungen in einem einzelnen oder in einer Mehrzahl einander benachbarter Büroräume.

10. Leuchtenvorrichtung zur Verwendung in einem Leuchtensystem nach einem der Ansprüche 1 bis 8,
ausgebildet als Wand- oder Deckenleuchte und aufweisend auf Mikrowellenbasis wirkende Detektionsmittel zur Bewegungs- und/oder Anwesen heitsdetektion.

## Claims

1. A lamp system comprising a plurality of lamp units (10a, 10b) configured to transmit data,
each lamp unit being configured to be fixedly installed at an installation site, having detection means (16) for motion, presence, ambient brightness and/or area brightness detection and having setting and/or parametrizing means (22) for defining and changing detection parameters of the detection means and lighting mode parameters of light sources associated with the lamp units,
**characterized in that**
the lamp units, which can be connected to each other in a wireless manner based on radio or high frequency, each have parameter communication means (28) associated with them in such a manner that in response to a preferably manual activation of a parameter communication means (28) of a first one of the lamp units (10a), parameter data of the detection and/or lighting mode parameters defined for the first lamp unit are transmitted to at least another one of the lamp units (10b) and are received by the parameter communication means (28) of said other lamp unit (10b) and the setting or parametrizing means (22) of said other lamp unit are controlled in such a manner that they define and set detection and/or lighting mode parameters that correspond to the detection and/or lighting mode parameters of the first lamp unit, the parameter communication means (28) being configured in such a manner that in a selectable manner an individual one of the detection or lighting mode parameters is transmitted correspondingly to a latest setting and/or definition made prior to the activation of the parameter communication means.

2. The lamp system according to claim 1, **characterized in that** the detection parameters include at least one parameter that is selected from the group consisting of a range parameter of the motion and/or presence detection, a sensor sensitivity of the motion and/or presence detection, a brightness threshold value of the ambient and/or area brightness detection.

3. The lamp system according to claim 1 or 2, **characterized in that** the lighting mode parameter includes at least one parameter that is selected from the group consisting of a minimum lighting duration parameter of the light sources, a maximum brightness parameter of the light sources, a minimum brightness parameter of the light sources, a light color or color temperature of the light sources, mode parameters for predefining different lighting modes of the light sources.

4. The lamp system according to any one of claims 1 to 3, **characterized in that** manually operable switch means, control means and/or interface means (24, 34-38) for operation by an operator can be associated with, preferably wirelessly connected to, the parameter communication means.

5. The lamp system according to claim 4, **characterized in that** the switch, control or interface means are configured as a manually operable remote control unit (34-32) wirelessly interacting with at least one of the lamp units.

6. The lamp system according to claim 5, **characterized in that** the remote control unit is configured for detachable and/or wireless interaction with a portable data processing device (38) which is configured as a touch-sensitive display (40) for displaying a parameter status of the detection and/or lighting mode parameters and/or configured for accepting operating and/or configuration commands from the operator.

7. The lamp system according to any one of claims 1 to 6, **characterized in that** the parameter communication means are configured in such a manner that a full dataset of all detection and lighting mode parameters of the first lamp unit that corresponds to a current parameter status of a lamp unit is transmitted.

8. The lamp system according to any one of claims 1 to 7, **characterized in that** the parameter communication means have confirmation and/or acknowledging means in such a manner that a positive acknowledging signal is generated, in particular transmitted back to the first lamp unit, in response to a successful transmission of the parameter data to the other lamp unit, and/or a negative acknowledging signal is generated, in particular transmitted back to the first lamp unit, in response to a faulty and/or incomplete transmission of the parameter data.

9. A use of the lamp system according to any one of claims 1 to 8 for office and/or object lighting, in particular for ceiling light fixtures in an individual office or in a plurality of adjacent offices.

10. A lamp device for use in a lamp system according to any one of claims 1 to 8,
configured as a wall or ceiling lamp and having detection means using microwave technology for motion and/or presence detection.

## Revendications

1. Système de luminaires comprenant une pluralité d'unités de luminaire (10a, 10b) configurées pour transmettre des données, chaque unité de luminaire étant configurée pour être montée de manière fixe à un lieu de montage, ayant des moyens de détection (16) destinés à détecter du mouvement, de la présence, de la luminosité ambiante et/ou de la luminosité de zone, et ayant des moyens de réglage et/ou de paramétrage (22) destinés à définir et changer des paramètres de détection des moyens de détection et des paramètres de mode d'éclairage des sources lumineuses associées aux unités de luminaire,
**caractérisé en ce que**
les unités de luminaire, qui peuvent être connectées l'une à l'autre de manière sans fil sur la base de radio ou de haute fréquence, ont chacune des moyens de communication de paramètres (28) associés à celles-ci de telle manière qu'en réponse à une activation préférablement manuelle d'un moyen de communication de paramètres (28) d'une première des unités de luminaire (10a), des données de paramètres des paramètres de détection et/ou de mode d'éclairage définis pour la première unité de luminaire sont transmises à au moins une autre des unités de luminaire (10b) et sont reçues par le moyen de communication de paramètres (28) de ladite autre unité de luminaire (10b) et les moyens de réglage ou de paramétrage (22) de ladite autre unité de luminaire sont commandés de telle manière qu'ils définissent et règlent des paramètres de détection et/ou de mode d'éclairage qui correspondent aux paramètres de détection et/ou de mode d'éclairage de la première unité de luminaire, les moyens de communication de paramètres (28) étant configurés de telle manière qu'un paramètre individuel des paramètres de détection ou de mode d'éclairage est transmis de manière sélectionnable et correspondant à un dernier réglage et/ou une dernière définition effectué(e) avant l'activation du moyen de communication de paramètres.

2. Système de luminaires selon la revendication 1, **caractérisé en ce que** les paramètres de détection comprennent au moins un paramètre sélectionné dans le groupe consistant en un paramètre de portée de la détection de mouvement et/ou de présence, une sensibilité de capteur de la détection de mouvement et/ou de présence, une valeur seuil de luminosité de la détection de luminosité ambiante et/ou de luminosité de zone.

3. Système de luminaires selon la revendication 1 ou 2, **caractérisé en ce que** le paramètre de mode d'éclairage comprend au moins un paramètre sélectionné dans le groupe consistant en un paramètre de durée minimale d'éclairage des sources lumineuses, un paramètre de luminosité maximale des sources lumineuses, un paramètre de luminosité minimale des sources lumineuses, une couleur de la lumière ou une température de la lumière des sources lumineuses, des paramètres de mode pour définir différents modes d'éclairage des sources lumineuses.

4. Système de luminaires selon l'une quelconque des revendications 1 à 3, **caractérisé en ce que** des moyens de commutation, de commande et/ou d'interface (24, 34-38) manuellement opérables par un opérateur peuvent être associés, préférablement connectés sans fil, aux moyens de communication de paramètres.

5. Système de luminaires selon la revendication 4, **caractérisé en ce que** les moyens de commutation, de commande ou d'interface sont configurés comme unité de télécommande (34-32) manuelle coopérant sans fil avec au moins une des unités de luminaire.

6. Système de luminaires selon la revendication 5, **caractérisé en ce que** l'unité de télécommande est configurée pour la coopération amovible et/ou sans fil avec un dispositif de traitement de données (38) portable qui est un écran tactile (40) destiné à afficher un état de paramètres des paramètres de détection et/ou de mode d'éclairage et/ou configuré pour recevoir des commandes d'utilisation et/ou de configuration de l'opérateur.

7. Système de luminaires selon l'une quelconque des revendications 1 à 6, **caractérisé en ce que** les moyens de communication de paramètres sont configurés de telle manière qu'un ensemble de données complet de tous les paramètres de détection ou de mode d'éclairage de la première unité de luminaire qui correspond à un état de paramètres actuel d'une unité de luminaire est transmis.

8. Système de luminaires selon l'une quelconque des revendications 1 à 7, **caractérisé en ce que** les moyens de communication de paramètres ont des moyens de confirmation et/ou d'accusé de réception de telle manière qu'un signal d'accusé de réception positif est généré, notamment transmis en retour à la première unité de luminaire en réponse à une transmission aboutie des données de paramètre à l'autre unité de luminaire, et/ou un signal d'accusé de réception négatif est généré, notamment transmis en retour à la première unité de luminaire en réponse à une transmission défectueuse et/ou incomplète des données de paramètres.

9. Utilisation du système de luminaires selon l'une quelconque des revendications 1 à 8 pour l'éclairage de bureaux et/ou d'objets, notamment pour des éclairages plafonniers dans un bureau individuel ou dans une pluralité de bureaux adjacents.

10. Dispositif de luminaire pour l'utilisation dans un système de luminaires selon l'une quelconque des revendications 1 à 8, configuré comme luminaire mural ou de plafond et ayant des moyens de détection utilisant des microondes pour la détection de mouvement et/ou de présence.
